# EUROPEAN PATENT APPLICATION

(11) **EP 4 509 300 A1**
(43) Date of publication of application: **19.02.2025**
(21) Application number: 23788411.9
(22) Date of filing: 14.04.2023
(51) Int. Cl.: B31B 70/81

(54) **FILM PIECE JOINING DEVICE, FILM MANUFACTURING DEVICE, BAG-SHAPED CONTAINER MANUFACTURING DEVICE, FILM PIECE JOINING METHOD, FILM MANUFACTURING METHOD, AND BAG-SHAPED CONTAINER MANUFACTURING METHOD**

(30) Priority: 15.04.2022 JP 2022067811
(71) Applicant: Idemitsu Unitech Co., Ltd., Tokyo 108-0014 (JP)
(72) Inventor: KATADA, Ryo, Tokyo 108-0014 (JP)
(74) Representative: Gille Hrabal Partnerschaftsgesellschaft mbB Patentanwälte
(86) International application number: PCT/JP2023/015103
(87) International publication number: WO 2023/199994

(57) **Abstract**

There is provided a film piece bonding device, including: a first conveyor conveying a resin member in a first direction; a second conveyor conveying a film piece in a second direction intersecting with the first direction; and a bonding unit configured to bond the film piece to the resin member by pressing the film piece against the resin member, the film piece being held by the second conveyor, the resin member being opposed to the film piece and being held by the first conveyor.

## Description

### TECHNICAL FIELD

The invention relates to a film piece bonding device, a film manufacturing device, a bag-shaped container manufacturing device, a film piece bonding method, a film manufacturing method, and a bag-shaped container manufacturing method.

### BACKGROUND ART

As for a container having a bag shape for packaging medicine, food, or the like, a variety of bags are known, each having a zipper tape bonded to a bag body formed of a film. In such a bag with a zipper tape, as disclosed in Patent Literature 1 for instance: portions of a single film are adhered at a back and the film is bonded in a direction orthogonal to the back-adhered direction to thereby configure a bag body; a reclosable fastener is bonded to, out of a front wall and a rear wall of the bag body opposed to each other, the front wall; and a pull-out plug or a thread for unsealing is attached to the front wall in the vicinity of the fastener.

In the technique disclosed in Patent Literature 1 above, multiple holes may be provided in the front wall by a punching mechanism to form the pull-out plug, and the holes can deteriorate a sealing property of the bag. It is also disclosed that the thread is provided on an inner surface of the front wall for unsealing; however, there is no disclosure about a specific method for exposing an end portion of the thread to the outside to form a tab. Typically, it is considered that a hole for the thread to pass through the film of the bag body is formed in the front wall so that the end portion of the thread serves as a tab. However, in this case also, the hole can deteriorate the sealing property of the bag.

In view of the foregoing, Patent Literature 2 discloses a bag, a film, and a method of manufacturing a bag, which make it possible to achieve high sealability. Specifically, the bag includes: a bag body having a containing space; an elongated member that is provided on one surface of a film that configures the bag body, and includes a tearing strip and a base strip; and a tab having an outer edge formed by a cutting line that passes through the base strip and the film. The base strip is provided along a longitudinal direction of the tearing strip between another surface of the film and the tearing strip. A protector covering the tab is provided on the film on a side on which base strip is provided.

### CITATION LIST

### PATENT LITERATURE(S)

Patent Literature 1: JP11-510461 A
Patent Literature 2: JP 2018-188196 A

### SUMMARY OF THE INVENTION

### PROBLEM(S) TO BE SOLVED BY THE INVENTION

According to a technique disclosed in Patent Literature 2 described above, the protector prevents communication through the cutting line of the tab between the containing space and an external space. This makes it possible to maintain a sealing property of the bag while facilitating unsealing with the tearing strip and the tab. Here, Patent Literature 2 discloses steps of: conveying a film piece punched into a predetermined shape while holding the film piece with a suction cup; placing the film piece at a predetermined position; and thereafter bonding the film piece to the elongated member and to the film by heat sealing, for instance, to provide the film piece as the protector. This case, however, necessitates operations including three steps, i.e., the conveying, the placing, and the bonding of the film piece, which makes it difficult to achieve a fast manufacturing process.

It is therefore an object of the invention to provide a film piece bonding device, a film manufacturing device, a bag-shaped container manufacturing device, a film piece bonding method, a film manufacturing method, and a bag-shaped container manufacturing method that make it possible to achieve a fast manufacturing process by performing a step of conveying a film piece and a step of bonding the film piece to a resin member in parallel.

### MEANS FOR SOLVING THE PROBLEM(S)

[1] A film piece bonding device, including: a first conveyor configured to convey a resin member in a first direction; a second conveyor configured to convey a film piece in a second direction intersecting with the first direction; and a bonding unit configured to bond the film piece to the resin member by pressing the film piece against the resin member, the film piece being held by the second conveyor, the resin member being opposed to the film piece and being held by the first conveyor.
[2] The film piece bonding device according to claim [1], in which the resin member has an elongated shape as a whole, the first direction is a longitudinal direction of the resin member, the film piece includes a plurality of film pieces, and the bonding unit is configured to sequentially perform bonding of the plurality of film pieces being sequentially conveyed by the second conveyor at a plurality of positions in the longitudinal direction of the resin member.
[3] The film piece bonding device according to [2], in which the second conveyor includes a plurality of conveying routes.
[4] The film piece bonding device according to [3], in which the second conveyor includes a conveyor configured to clamp the film piece, the conveyor configuring a first conveying route and a conveyor configured to clamp the film piece, the conveyor configuring a second conveying route, and the film piece bonding device further includes a receiver base that is disposed in a middle between the first conveyor and the second conveyor, and is configured to support an end portion of the film piece, the end portion being on a side opposite to a side of the film piece clamped by the conveyor configuring the first conveying route or the second conveying route.
[5] The film piece bonding device according to [3] or [4], further including a cutting unit configured to cut out the film piece from a raw film, in which the second conveyor is configured to move between a plurality of positions, each of the plurality of positions being at which the film piece cut by the cutting unit is to be supplied to each of the plurality of conveying routes.
[6] The film piece bonding device according to [3] or [4], further including: a cutting unit configured to cut out the film piece from a raw film; and a sorter configured to sort the film piece cut by the cutting unit into any one of the plurality of conveying routes.
[7] The film piece bonding device according to any one of [1] to [6], in which the second conveyor includes a pair of belts that are arranged adjacent to each other and configured to clamp the film piece, and at least one of the pair of belts includes a magnetic material.
[8] The film piece bonding device according to any one of [1] to [7], in which the bonding unit includes a heat sealer or an ultrasonic sealer.
[9] A film manufacturing device including the film piece bonding device according to any one of [1] to [8], in which the resin member includes a film having an elongated shape and an elongated member bonded to the film and extending in a width direction of the film, the elongated member having a cut, and the bonding unit is configured to bond the film piece to a region covering the cut of the resin member.
[10] A bag-shaped container manufacturing device including the film manufacturing device according to [9], in which the bag-shaped container manufacturing device further includes a bag manufacturing mechanism configured to shape the film into a bag shape.
[11] A film piece bonding method, including: first conveying of conveying a resin member in a first direction; second conveying of conveying a film piece in a second direction intersecting with the first direction; and bonding of bonding the film piece to the resin member by pressing the film piece against the resin member, the film piece being held after being conveyed in the second direction, the resin member being opposed to the film piece in a direction orthogonal to the first direction and to the second direction.
[12] The film piece bonding method according to [11], in which the resin member has an elongated shape as a whole, the first direction is a longitudinal direction of the resin member, the film piece includes a plurality of film pieces, the second conveying includes sequentially conveying the plurality of film pieces in the second direction, and the bonding includes sequentially bonding the plurality of film pieces at a plurality of positions in the longitudinal direction of the resin member.
[13] The film piece bonding method according to [12], in which the second conveying includes conveying the plurality of film pieces through any of a plurality of conveying routes.
[14] The film piece bonding method according to [13], further including cutting out the film piece from a raw film, in which the second conveying includes supplying the film piece cut from the raw film to any of the plurality of conveying routes by moving a conveying unit configuring the plurality of conveying routes.
[15] The film piece bonding method according to [13], further including: cutting out the film piece from a raw film; and sorting the film piece cut from the raw film to any of the plurality of conveying routes.
[16] The film piece bonding method according to any one of [11] to [15], in which the bonding includes bonding the film piece to the resin member by heat sealing or ultrasonic sealing.
[17] A film manufacturing method including the film piece bonding method according to any one of [11] to [16], in which the resin member includes a film having an elongated shape and an elongated member bonded to the film and extending in a width direction of the film, the elongated member having a cut, and the bonding includes bonding the film piece to a region covering the cut of the resin member.
[18] A bag-shaped container manufacturing method including the film manufacturing method according to [17], in which the bag-shaped container manufacturing method further includes shaping the film into a bag shape.

According to the above configurations, the resin member and the film piece are conveyed in the respective directions intersecting with each other, and are bonded to each other by pressing, against the resin member, the film piece in a state of being held by a conveyor. This makes it possible to perform conveying the film piece and bonding the film piece to the resin member in parallel, thus achieving a fast manufacturing process.

### BRIEF DESCRIPTION OF DRAWINGS

Fig. 1 is a plan view of a bag-shaped container according to an exemplary embodiment of the invention.
Fig. 2 is a first example of a cross-sectional view taken along a line II-II of Fig. 1.
Fig. 3 is a second example of the cross-sectional view taken along the line II-II of Fig. 1.
Fig. 4 schematically illustrates a process of manufacturing the bag-shaped container illustrated in Fig. 1.
Fig. 5 illustrates a protector attachment portion of a manufacturing device illustrated in Fig. 4.
Fig. 6 is an arrow view taken along a line VI-VI of Fig. 5.
Fig. 7 illustrates a state in which some components in the device of Fig. 5 are moved.
Fig. 8 illustrates another example of the protector attachment portion of the manufacturing device illustrated in Fig. 4.
Fig. 9 is an arrow view taken along a line IX-IX of Fig. 8.

### DESCRIPTION OF EMBODIMENT(S)

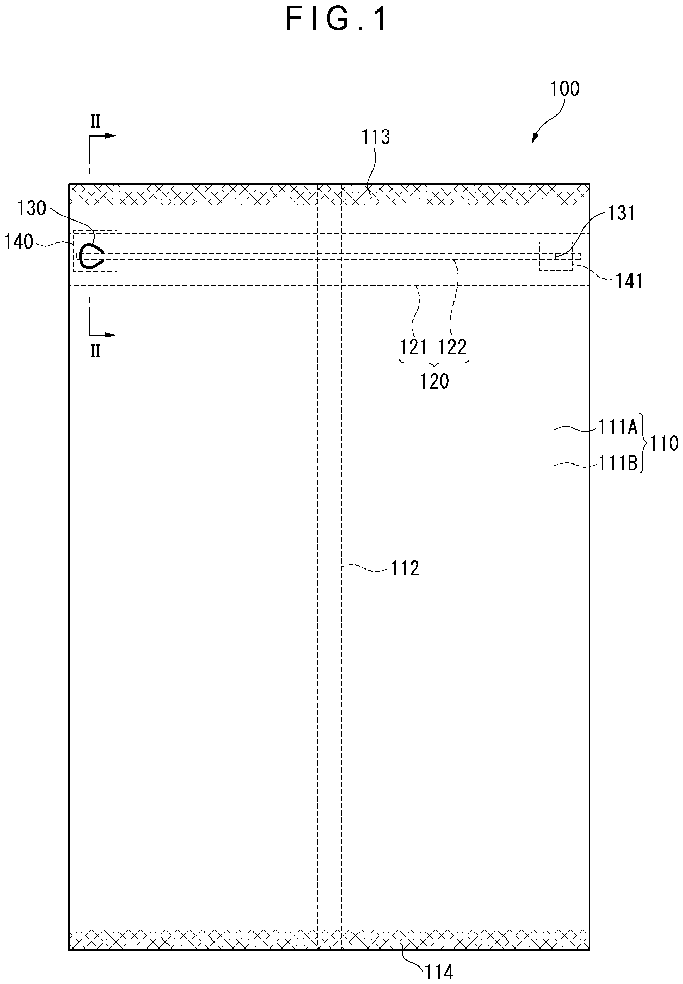

Fig. 1 is a plan view of a bag-shaped container according to an exemplary embodiment of the invention. In the illustrated example, a bag-shaped container 100 includes a film 110, an elongated member 120, and a protector 140. The film 110 has a first surface 111A and a second surface 111B that form a bag body and are opposed to each other. The elongated member 120 is to be bonded to the first surface 111A of the film 110. The elongated member 120 includes a base strip 121 and a tearing strip 122. A tab 130 is provided in a peripheral part of one of end portions in a longitudinal direction of the elongated member 120.

The film 110 includes, for instance, a single-layered or multi-layered thermoplastic resin film. A thermoplastic resin may specifically include low density polyethylene (LDPE), linear low density polyethylene (LLDPE), or polypropylene (PP). PP may be a polypropylene homopolymer (HPP), a polypropylene random copolymer (RPP), or a polypropylene block copolymer (BPP). When the film 110 includes a multi-layered film, biaxially oriented polypropylene (OPP), biaxially oriented polyethylene terephthalate (OPET), or biaxially oriented nylon (ONy) may be used for a surface base. A film that configures the film 110 may include a layer of a metal material such as aluminum, or a layer of an inorganic material. Further, a resin film containing any amount of bio-plastic such as biopolyethylene may also be used.

In the exemplary embodiment, the first surface 111A and the second surface 111B are formed by folding back the film 110 at respective positions that are predetermined dimensions away from both end edges of the film 110, and linearly bonding, along a seal portion 112 having a linear shape, the both end edges of the folded film 110. An upper end and a lower end of the bag body are respectively sealed with a seal portion 113 and a seal portion 114. For instance, when the bag-shaped container 100 is to be filled with contents after the completion of the bag-shaped container 100, at least one of the seal portion 113 or the seal portion 114 may not be formed.

The elongated member 120 includes the base strip 121 and the tearing strip 122. The tearing strip 122 is formed from a material different from that for the base strip 121. The elongated member 120 is bonded to the first surface 111A of the film 110 that configures a container body. The tab 130 is provided by, for instance, a C-shaped cut that passes through the base strip 121 and the tearing strip 122 of the elongated member 120 and the first surface 111A of the film 110. Upon unsealing, a user pulls the tearing strip 122 starting from the tab 130 and cuts the first surface 111A of the film 110 by the tearing strip 122, which makes it possible to unseal the bag-shaped container 100. In the exemplary embodiment, the tab 130 is provided in the peripheral part of one of the end portions in the longitudinal direction of the elongated member 120.

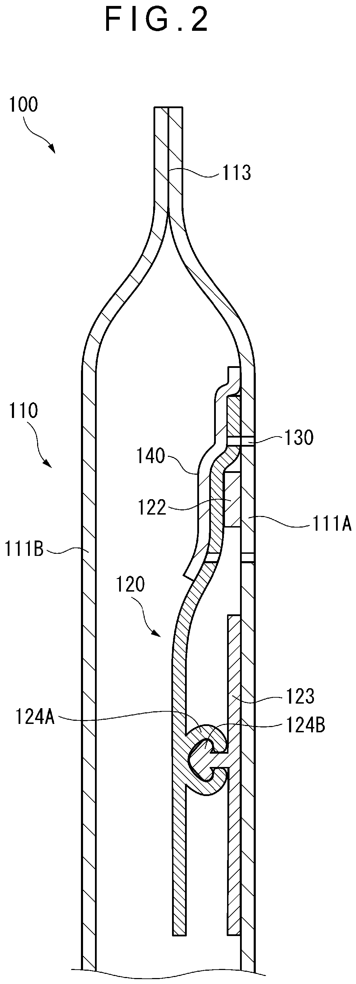

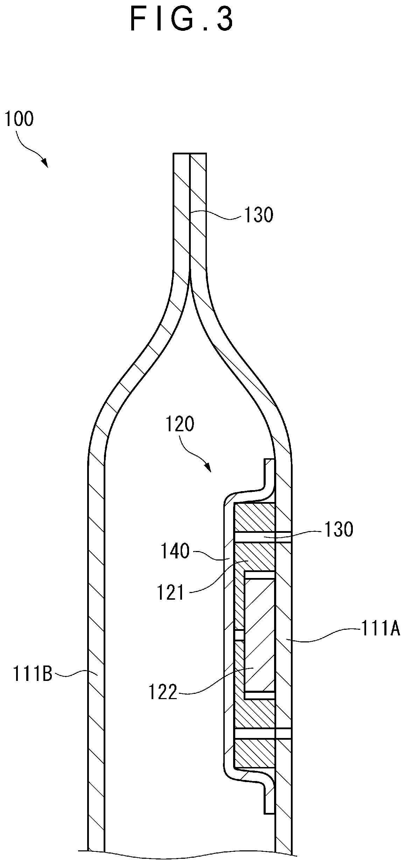

Here, for instance, as in the cross-sectional view illustrated in Fig. 2, the elongated member 120 may further include an opposite base strip 123, an engagement portion 124A, and an engagement portion 124B to configure a zipper tape. The engagement portions 124A and 124B respectively protrude from the base strip 121 and the opposite base strip 123, and are engageable with each other. Although the engagement portions 124A and 124B as a pair having male and female shapes are illustrated, the invention is not limited thereto. It is possible to employ various shapes of engagement portions of known zipper tapes having a combination of, for instance, a claw shape, a hook shape, and a knob shape. Further, two or more pairs of engagement portions may be provided. In this case, one or more pairs of engagement portions having different shapes (e.g., one or more pairs of the male and female shapes and one or more of the hook shape) may be provided, or two or more pairs of engagement portions having the same shape (e.g., the male and female shapes) may be provided. Alternatively, as with the cross-sectional view illustrated in Fig. 3, the elongated member 120 may include a single base strip 121 and configure a simple tape that is not a zipper tape.

In the elongated member 120 as described above, the base strip 121 is formed by extrusion molding of a polyolefin-based resin, for instance. More specifically, the base strip 121 may be formed from low density polyethylene (LDPE), linear low density polyethylene (LLDPE), or polypropylene (PP). PP may be a polypropylene homopolymer (HPP), polypropylene random copolymer (RPP), or polypropylene block copolymer (BPP). These may each be an environmentally friendly bioplastic, or a mixture of a resin derived from fossil fuel and a biomass plastic such as biopolyethylene. A known additive such as a stabilizer, antioxidant, lubricant, antistatic agent, or coloring agent may be added to the material of the base strip 121, as necessary.

The tearing strip 122 is formed, for instance, by extrusion molding of a polyolefin-based resin similarly to the base strip 121. The tearing strip 122 formed from a resin having low compatibility with a resin included in the base strip 121 enables the base strip 121 and the tearing strip 122 to undergo interfacial peeling on a bonding surface. For this purpose, for instance, one of the base strip 121 and the tearing strip 122 may be formed from a low-density-polyethylene-based resin and the other may be formed from a polypropylene random copolymer-based resin. Specific examples of such a combination include low density polyethylene (LDPE)/polypropylene random copolymer (RPP), linear low density polyethylene (LLDPE)/RPP (some of which include m-LL), LDPE/polypropylene homopolymer (HPP), LLDPE/HPP (some of which include m-LL), LDPE/polystyrene (PS), LLDPE/PS (also including m-LL), RPP/PS, HPP/PS, LDPE/polyethylene terephthalate (PET), LLDPE/PET, RPP/PET, HPP/PET, PS/PET, LDPE/nylon (Ny), LLDPE/Ny, RPP/Ny, HPP/Ny, and PS/Ny.

The protector 140 is so disposed as to cover, on an inner side of the container body, a region in which the cut of the tab 130 is provided, and is bonded to the elongated member 120. The protector 140 may extend beyond the elongated member 120 and may also be bonded to the first surface 111A of the film 110. The protector 140 seals a space leading to the cut of the tab 130 on the inner side of the container body, making it possible to improve sealability of the bag-shaped container 100 before being unsealed with the use of the tearing strip 122. The material of the protector 140 is, for instance, similar to that of the film 110 described above. Among the above-described materials, different materials may be selected for the protector 140 and the film 110, but it is more preferable to select the same material for the protector 140 and the film 110.

In addition, the bag-shaped container 100 may include a cut 131 that passes through at least the first surface 111A of the film 110 and the tearing strip 122. The cut 131 is provided at a position different from that of the tab 130, for instance, provided on a side opposite to a side on which the tab 130 is to be provided, in a peripheral part of the other one of the end portions of the elongated member 120. Providing the cut 131 facilitates formation of an end point of the cutting of the first surface 111A by the tearing strip 122. The cut 131 may pass through not only the first surface 111A and the tearing strip 122, but also the base strip 121 of the elongated member 120, for instance. In this case, a protector 141 is so disposed as to cover, on the inner side of the container body, a region in which the cut 131 is provided, and is bonded to the elongated member 120. This makes it possible to improve the sealability of the bag-shaped container 100 before being unsealed by the tearing strip 122. As with the protector 140 described above, the protector 141 may be bonded not only to the elongated member 120 but also to the first surface 111A. Alternatively, the cut 131 may be so provided as to pass through the first surface 111A and the tearing strip 122 and not to pass through the base strip 121. In this case, a space leading to the cut 131 does not reach the inner side of the container body. The protector 141 may thus not be disposed.

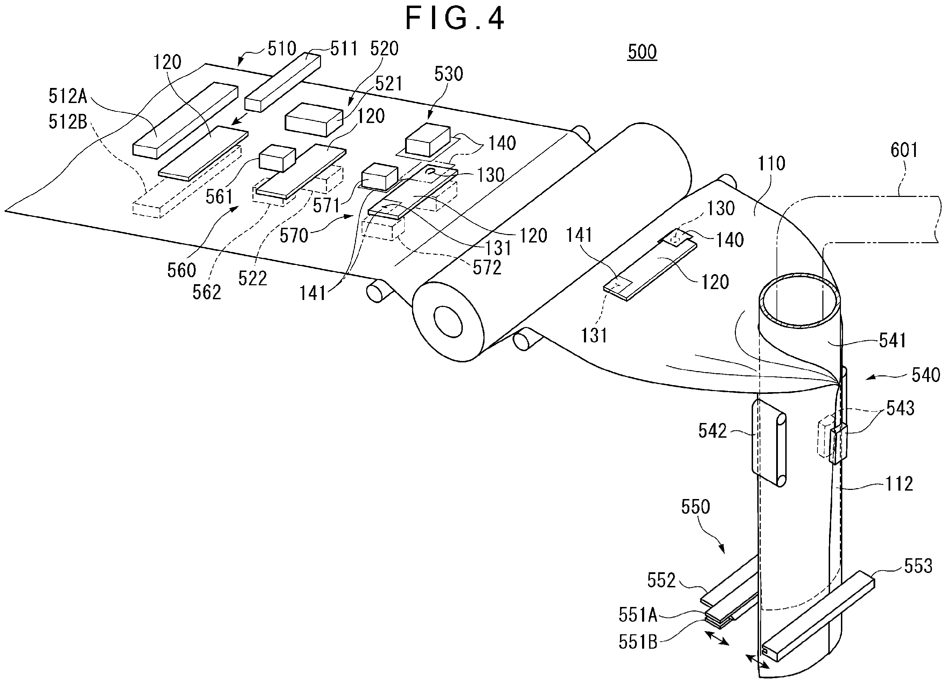

Fig. 4 schematically illustrates a process of manufacturing the bag-shaped container illustrated in Fig. 1. In the illustrated example, a manufacturing device 500 includes an elongated-member attachment portion 510, a tab former 520, a protector attachment portion 530, a bag body former 540, and a top/bottom former 550. Specific configurations of the respective components will be described below. In the manufacturing device 500, the film 110 having an elongated shape drawn out from, for instance, an unillustrated roll is processed in the above-described components while being intermittently conveyed. In the following, further description is given of those components.

The elongated-member attachment portion 510 bonds the elongated member 120 extending in a width direction of the film 110 to the film 110 to be conveyed in the longitudinal direction. The elongated member 120 includes the base strip 121 and the tearing strip 122 illustrated in Fig. 1. The base strip 121 and the tearing strip 122 are members having elongated shapes extending in the same direction. It is thus possible to mold the base strip 121 and the tearing strip 122 in advance by, for instance, extrusion (including co-extrusion), and thereafter bond them together as the elongated member 120 to the film 110. In this case, the manufacturing process further includes a step of integrally molding the base strip 121 and the tearing strip 122 by, for instance, co-extrusion. This step is carried out by a molding device such as an extruder included in the manufacturing device 500 or provided separately from the manufacturing device 500.

Specifically, the elongated-member attachment portion 510 includes a feeder 511, a receiver base 512A, and a seal bar 512B. The feeder 511 sends the elongated member 120 having a predetermined length and disposes the elongated member 120 at a predetermined position on the film 110. The feeder 511 may include a cutter that cuts out the elongated member 120. The receiver base 512A and the seal bar 512B sandwich the film 110 together with the elongated member 120, and bond the elongated member 120 to the film 110 by, for instance, heat sealing or ultrasonic sealing. Alternatively, an adhesive may be applied in advance between the elongated member 120 and the film 110, and the receiver base 512A and the seal bar 512B may sandwich and press the film 110 and the elongated member 120 that are stacked on each other to thereby bond the film 110 and the elongated member 120 to each other. The receiver base 512A is formed from, for instance, silicone.

The tab former 520 forms the tab 130 in the film 110 and the elongated member 120 bonded to the film 110. Specifically, the tab former 520 includes a cutter 521 and a receiver base 522. The cutter 521 has an unillustrated planar shape corresponding to the cut serving as the tab 130. In the exemplary embodiment, the tab 130 is provided by the C-shaped cut, and thus the cutter 521 also has a planar shape of the C-shape. The film 110 has not yet been folded back at this stage, which makes it possible for the cutter 521 to cut through the film 110 and the elongated member 120 in a thickness direction to thereby form the tab 130.

The protector attachment portion 530 bonds the protector 140 to a region covering the cut of the tab 130 on the elongated member 120. A detailed configuration of the protector attachment portion 530, including a range not illustrated in Fig. 4, will be described later.

The bag body former 540 configures, together with the top/bottom former 550, a bag manufacturing mechanism that shapes the film 110 into a bag shape. Specifically, the bag body former 540 includes a roll core 541, a conveyor belt 542, and a sealer 543. The film 110 is conveyed downward by the conveyor belt 542 while being rolled around the roll core 541. The roll core 541 has a substantially circular cross section at an upper portion, making it possible for the film 110 to be smoothly wound into a roll. The film 110 wound into the roll is folded back on both sides in the width direction. The first surface 111A and the second surface 111B as described above with reference to Fig. 1 are thereby formed. A region to which the elongated member 120 is bonded serves as the first surface 111A. The sealer 543 bonds both end edges in the width direction of the wound film 110 to each other, to thereby form the seal portion 112. A region in which the seal portion 112 is formed serves as the second surface 111B. The sealer 543 forms the seal portion 112 by a method such as heat sealing, as with the receiver base 512A and the seal bar 512B described above.

The top/bottom former 550 forms the seal portions 113 and 114 in the film 110 that has been folded back on the both sides in the width direction, and cuts the film 110 in the width direction to thereby form the bag-shaped container 100. The top/bottom former 550 includes seal bars 551A and 551B, a cutter 552, and a receiver base 553. The seal bars 551A and 551B are vertically opposed to each other with the cutter 552 interposed therebetween, and the seal portions 113 and 114 are formed in the film 110 by the opposing portion. The seal bars 551A and 551B form the seal portions 113 and 114 by a method such as heat sealing, as with the receiver base 512A and the seal bar 512B described above. The cutter 552 moves toward and away from the receiver base 553, and cuts the film 110 in the width direction in the vicinity of the seal portions 113 and 114.

Here, the above-described roll core 541 is hollow, and a filling device 601 is inserted from above into the inside of the roll core 541. The filling device 601 discharges contents in synchronization with the seal bars 551A and 551B of the top/bottom former 550 sandwiching the film 110. This makes it possible to fill a containing space provided above the seal portion 114 located at a bottom of the bag-shaped container 100 with the contents. When the seal bars 551A and 551B move away from each other, the contents are conveyed downward together with the film 110 beyond the seal bars 551A and 551B, following which the seal portion 113 is formed at a top of the bag-shaped container 100 to thereby seal the containing space.

The bag-shaped container 100 is manufacturable by the above-described manufacturing process. It is to be noted that the above-described process is merely an example, and various modifications are possible. For instance, after completing the steps up to the protector attachment portion 530, the film 110 may be wound up again on a roll or the like, conveyed, and stored. Then, the film 100 may be drawn out from the roll and subjected to the steps starting from the bag body former 540. In this case, the manufacturing process of the film equipped with the elongated member and the manufacturing process of the bag-shaped container using the film equipped with the elongated member are separately performed.

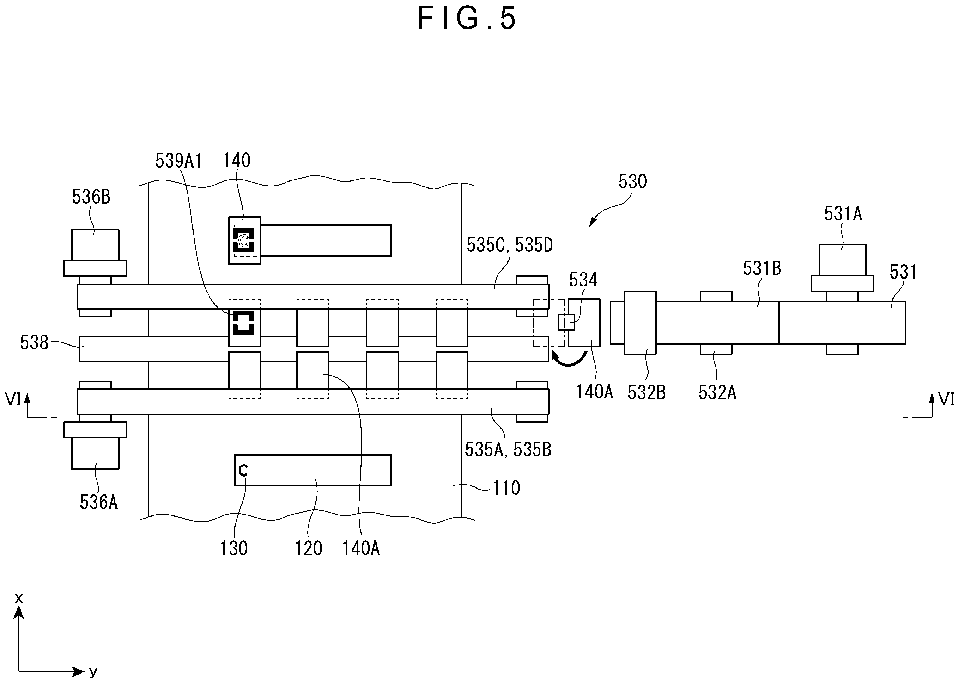

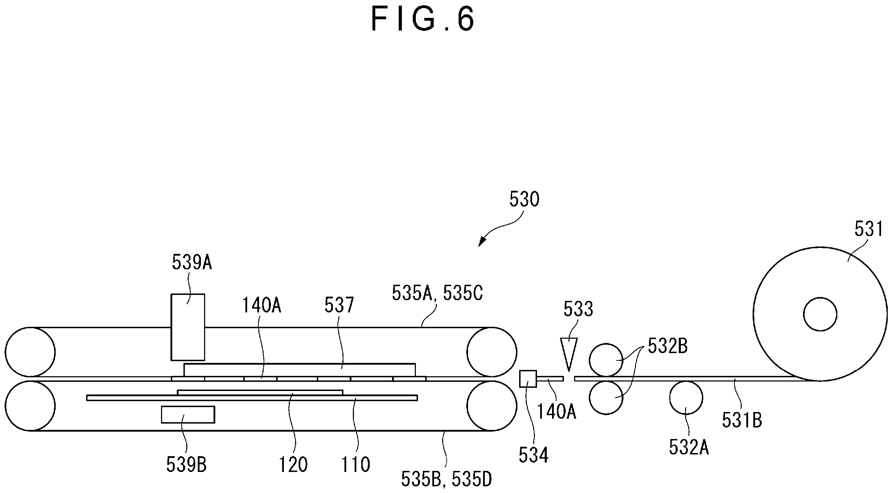

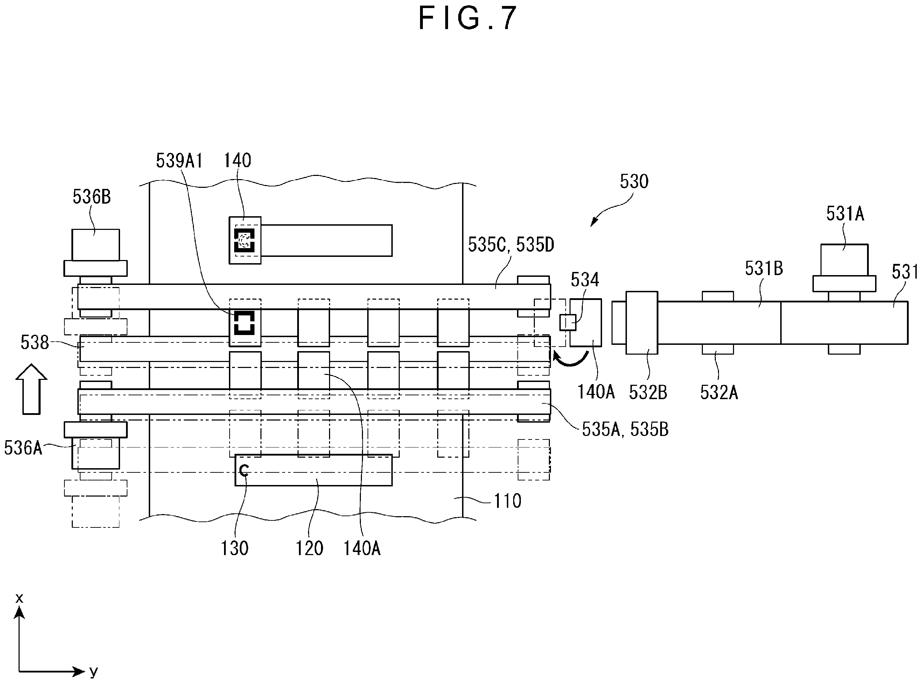

Figs. 5 to 7 each illustrate the protector attachment portion of the manufacturing device illustrated in Fig. 4. Fig. 6 is an arrow view taken along a line VI-VI of Fig. 5. moved. Fig. 7 illustrates a state in which some components in the device of Fig. 5 are moved. In the illustrated example, the protector attachment portion 530 includes a raw-film roll 531, a dancer roll 532A, a feed roll 532B, a cutter 533, a rotary actuator 534, SUS belts 535A, 535B, 535C, and 535D, feed servo motors 536A and 536B, a magnetic holder 537, a receiver base 538, a heat sealer 539A, and a receiver base 539B. As described below, the protector attachment portion 530 corresponds to a film piece bonding device. The film piece bonding device cuts out a film piece 140A to be the protector 140, conveys the film piece 140A in a direction (a y direction in the figure) intersecting with a conveying direction of the film 110 (an x direction in the figure) with the use of the SUS belts 535A, 535B, 535C, and 535D serving as a conveyor, and bonds the film piece 140A to the elongated member 120 by sandwiching the film piece 140A held by the conveyor between the heat sealer 539A and the receiver base 539B. In the following, further description is given of those components.

The raw-film roll 531 is rotated by a motor 531A to feed a raw film 531B at a predetermined rate. The raw-film roll 531 may feed the raw film 531B continuously or intermittently. The tensile force of the fed raw film 531B is adjusted by the dancer roll 532A, and the conveyance rate of the fed raw film 531B is adjusted by the feed roll 532B, following which the fed raw film 531B is cut to a predetermined length by the cutter 533. As a result, the film piece 140A is cut from the raw film 531B. The film piece 140A cut from the film 531B is held by a holder such as a clamp provided for the rotary actuator 534, and is sandwiched between the SUS belts 535A and 535B or between the SUS belts 535C and 535D by rotational movement of the rotary actuator 534. As illustrated in Fig. 7, a part including the SUS belts 535A and 535B and the SUS belts 535C and 535D moves, making it possible to switch a conveying route through which the film piece 140A is to be supplied between a route of the SUS belts 535A and 535B and a route of the SUS belts 535C and 535D. In the illustrated example, the part including the SUS belts 535A and 535B and the SUS belts 535C and 535D is movable between multiple positions in a direction perpendicular to a conveying direction of the film piece 140A, that is, in the conveying direction of the film 110 (the x direction).

The SUS belts 535A and 535B serve as a pair of endless belts whose surfaces are covered with SUS (steel use stainless, stainless steel). The SUS belts 535A and 535B are driven synchronously with each other by rotation of the feed servo motor 536A to convey the film piece 140A in the direction (the y direction) intersecting with the conveying direction of the film 110 (the x direction). In this case, the film piece 140A is clamped between the SUS belt 535A and the SUS belt 535B. The SUS belts 535A and 535B may be driven continuously or intermittently, for instance. The SUS belts 535C and 535D also serve as a pair of endless belts formed from stainless steel, and are driven by the feed servo motor 536B in the same manner as the SUS belts 535A and 535B to convey the film piece 140A. As will be described later, when the film piece 140A is clamped by attracting a surface of the belt by magnetic force of the magnetic holder 537, the SUS belts 535B and 535D disposed on the opposite side of the magnetic holder 537 each include a magnetic material. The magnetic material is not limited, and is preferably SUS having a magnetic property from a viewpoint of durability against rust, for instance. The SUS belts 535A and 535C disposed on a side of the magnetic holder 537 do not have to include the magnetic material, but may include the magnetic material from a viewpoint of commonalizing the components. Further, a material for the SUS belts 535A and 535C is also preferably SUS (which may or may not have a magnetic property) from the viewpoint of durability against rust, for instance.

Here, assuming that the conveyor of the film 110, such as the roll, included in the manufacturing device 500 illustrated in Fig. 4 is referred to as a first conveyor, the SUS belts 535A and 535B and the SUS belts 535C and 535D are referred to as a second conveyor that conveys the film piece 140A in the direction intersecting with the conveying direction of the film 110 by the first conveyor. While the first conveyor is conveying the film 110 to the longitudinal direction of the film 110 (the x direction), the second conveyor sequentially conveys multiple film pieces 140A in the direction (the y direction) intersecting with the longitudinal direction of the film 110, and the heat sealer 539A is operated at an appropriate timing as will be described later. Accordingly, the film pieces 140A can be bonded at multiple positions in the longitudinal direction of the film 110.

In the illustrated example, the SUS belts 535A and 535B and the SUS belts 535C and 535D configure two conveying routes arranged in parallel. As in the illustrated example, for instance, the part including the SUS belts 535A and 535B and the SUS belts 535C and 535D is moved, and the film piece 140A cut from the film 531B is supplied, by the rotary actuator 534, to either the conveying route of the SUS belts 535A and 535B or the conveying route of the SUS belts 535C and 535D. Accordingly, the film piece 140A is conveyable through any one of the two conveying routes. This makes it possible to reduce intervals between the film pieces 140A in the conveying direction (the y direction) and to maximize the processing speed, i.e., the number of protectors 140 to be attached per hour. The invention is not limited to the illustrated example, and, for instance, only one conveying route may be provided, or three or more conveying routes arranged in parallel may be provided, depending on desired processing speed.

The magnetic holder 537 is provided when at least part of the SUS belts includes the magnetic material such as ferritic stainless steel or martensitic stainless steel. Out of the pair of SUS belts (the SUS belts 535A and 535B or the SUS belts 535C and 535D) that are disposed adjacent to each other and clamp the film piece 140A, the magnetic holder 537 is disposed on a back side of a surface of one of the SUS belts that clamps the film piece 140A, and attracts a surface of the other one of the SUS belts that clamps the film piece 140A by the magnetic force. Specifically, the magnetic holder 537 is disposed inside a loop of the SUS belt 535A serving as the endless belt, and attracts the surface of the SUS belt 535B provided on the opposite side by the magnetic force. In this case, the SUS belt 535B includes the magnetic material, and a material for the SUS belt 535A may or may not have a magnetic property. As a result, it is possible to more firmly clamp the film piece 140A between the SUS belts 535A and 535B, and to prevent, for instance, positional deviation. The magnetic holder 537 may be located on a side of the SUS belt 535B instead of a side of the SUS belt 535A. In this case, the SUS belt 535A includes the magnetic material. In the illustrated example, the magnetic holder 537 is also disposed inside a loop of any one of the SUS belts 535C and 535D (the SUS belt 535C in the illustrated example). A strength of the magnetic force by which the magnetic holder 537 attracts the SUS belt is not particularly limited as long as it is possible to stably clamp the film piece 140A.

The receiver base 538 extends in the same direction as the conveying direction of the film piece 140A (the y direction) in the middle between the pair of SUS belts 535A and 535B and the pair of SUS belts 535C and 535D, and supports an end portion, of the film piece 140A, on a side opposite to a side of the film piece 140A clamped by the SUS belt. For instance, when the film piece 140A is soft, the support by the receiver base 538 makes it possible to prevent the end portion from hanging down, and to avoid falling off of the film piece 140A from the SUS belt or sealing failure caused by an unstable positional relationship between the heat sealer 539A and the film piece 140A. Disposing the receiver base 538, on which the end portion, of the film piece 140A, on the side opposite to the side of the film piece 140A clamped by each SUS belt is placed, in the middle between the two conveying routes, an entire arrangement of the protector attachment portion 530 can be downsized.

The heat sealer 539A includes a heating device that heats a surface in contact with the film piece 140A, specifically, an unillustrated heating plate or an unillustrated heater, for instance. The heat sealer 539A is pressed from above against the film piece 140A conveyed by the SUS belts 535A and 535B or the SUS belts 535C and 535D. The receiver base 539B is located below the film 110 at a position corresponding to the heat sealer 539A. In this case, positioning of the film 110 is performed so that the film piece 140A is pressed against the region covering the cut of the tab 130 provided in the elongated member 120 bonded to the film 110, with the use of the conveyor (the first conveyor) of the film 110, such as the roll included in the manufacturing device 500. This allows the film piece 140A, the elongated member 120, and the film 110 to be sandwiched between the heat sealer 539A and the receiver base 539B, thus allowing the protector 140 to be bonded to the above-described region covering the cut of the tab 130.

As already described above, the illustrated example includes two conveying routes that are arranged in parallel, i.e., the conveying route of the SUS belts 535A and 535B and the conveying route of the SUS belts 535C and 535D. In such a case, for the film piece 140A conveyed by the SUS belts 535A and 535B and the film piece 140A conveyed by the SUS belts 535C and 535D, separate sets each including the heat sealer 539A and the receiver base 539B may be provided, or either the heat sealer 539A or the receiver base 539B may be shared between the respective film pieces 140A conveyed through the two conveying routes for the bonding. In this case, the following configuration may be employable. When the heat sealer 539A and the receiver base 539B are fixed and the part including the SUS belts 535A and 535B and the SUS belts 535C and 535D moves to switch the conveying route as described above, either a position of the SUS belts 535A and 535B or a position of the SUS belts 535C and 535D aligns with the heat sealer 539A and the receiver base 539B. Alternatively, the heat sealer 539A and the receiver base 539B may move in the conveying direction of the film 110 (the x direction) so as to be aligned to either the position of the SUS belts 535A and 535B or the position of the SUS belts 535C and 535D. The same applies to a case where the number of conveying routes is three or more.

In the above-described example, the heat sealer 539A is used as a bonding unit of the film piece 140A; however, in another example, an oscillator may be disposed instead of the heater, and the protector 140 may be bonded to the elongated member 120 by ultrasonic sealing. Alternatively, when the film piece or the elongated member 120 is coated with the adhesive in advance, the bonding unit only has to simply press the film piece against the elongated member 120, and neither heater nor oscillator is needed. In addition, the protector 140 is illustrated as being bonded only to the elongated member 120 in the above-described example; however, the protector 140 may also be bonded to the film 110 beyond the elongated member 120.

To make the above-described bonding of the protector 140 possible, as illustrated in Fig. 5, a seal region 539A1 in which the heat sealer 539A is to be pressed against the film piece 140A is so set as not to overlap with the SUS belts 535A and 535B (or the SUS belts 535C and 535D) and the receiver base 538. As a result, the heat sealer 539A moving up and down to sandwich the film piece 140A with the receiver base 539B does not interfere with the SUS belts and the receiver base conveying or supporting the film piece 140A.

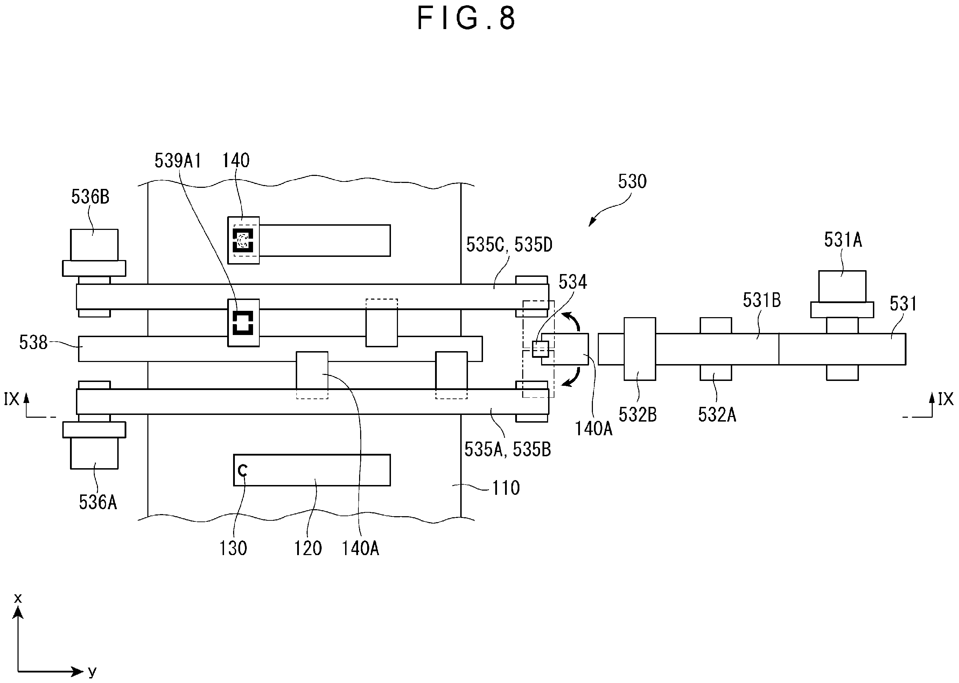

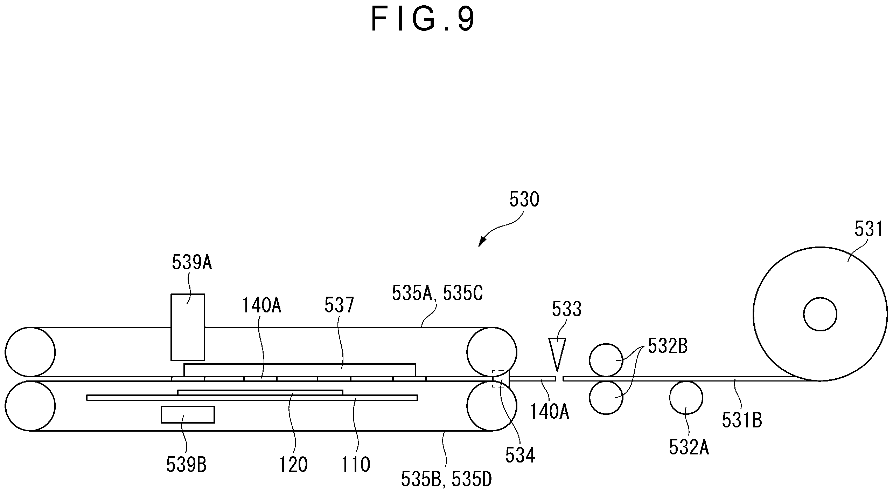

Figs. 8 and 9 illustrate another example of the protector attachment portion of the manufacturing device illustrated in Fig. 4. Fig. 9 is an arrow view taken along a line IX-IX of Fig. 8. The example of Figs. 8 and 9 differs from the example described above with reference to Figs. 5 to 7 in that, instead of the part including the SUS belts 535A and 535B and the SUS belts 535C and 535D moving, the rotary actuator 534 serves as a sorter that sorts the film piece 140A cut from the film 531B to either the conveying route of the SUS belts 535A and 535B or the conveying route of the SUS belts 535A and 535B. Regarding respective positions in the conveying direction of the film pieces 140A to be conveyed through the two conveying routes, i.e., the conveying route of the SUS belts 535A and 535B and the conveying route of the SUS belts 535C and 535D, the positions are aligned with each other between the both conveying routes in the example of Fig. 5, and the positions are alternated with each other between the both conveying routes in the example of Fig. 8. However, a positional relationship of the film pieces 140A between the conveying routes is not particularly limited, and for instance, the film pieces 140A may be conveyed with their positions slightly deviated.

According to an exemplary embodiment of the exemplary embodiment as described above, the film 110 to which the elongated member 120 is bonded is conveyed in the longitudinal direction (the x direction), whereas the film piece 140A is conveyed in the direction (the y direction) intersecting with the conveying direction of the film 110 with the use of the SUS belts 535A, 535B, 535C, and 535D, and the film piece 140A is pressed against the elongated member 120 and the film 110 with the use of the heat sealer 539A in the state of being held by the SUS belts 535A, 535B, 535C, and 535D, making it possible to bond the film piece 140A to the elongated member 120 and/or the film 110. As a result, the step of conveying the film piece 140A and the step of bonding the film piece 140A to the resin member such as the film 110 and the elongated member 120 can be performed in parallel, thus achieving a fast manufacturing process.

### EXPLANATION OF CODES

100...bag-shaped container, 110...film, 111A...first surface, 111B...second surface, 112,113,114...seal portion, 120...elongated member, 121...base strip, 122...tearing strip, 123...opposite base strip, 124A,124B...engagement portion, 130...tab, 131...cut, 140,141...protector, 140A...film piece, 500...manufacturing device, 510...elongated-member attachment portion, 511...feeder, 512A...receiver base, 512B...seal bar, 520...tab former, 521...cutter, 522...receiver base, 530...protector attachment portion, 531...raw-film roll, 531A...motor, 531B...raw film, 532A...dancer roll, 532B...feed roll, 533...cutter, 534...rotary actuator, 535A,535B,535C,535D...SUS belt, 536A,536B...feed servo motor, 537...magnetic holder, 538...receiver base, 539A...heat sealer, 539A1...seal region, 539B...receiver base, 391: hot plate, 392: heater, 401: first member, 401A: die blade, 402: second member, 402A: punch blade, 540: bag body former, 541: roll core, 542: conveyor belt, 543: sealer, 550: bottom former, 551A: seal bar, 551B: seal bar, 552: cutter, 553: receiver base, 601: filling device.

## Claims

1. A film piece bonding device, comprising:
a first conveyor configured to convey a resin member in a first direction;
a second conveyor configured to convey a film piece in a second direction intersecting with the first direction; and
a bonding unit configured to bond the film piece to the resin member by pressing the film piece against the resin member, the film piece being held by the second conveyor, the resin member being opposed to the film piece and being held by the first conveyor.

2. The film piece bonding device according to claim 1, wherein
the resin member has an elongated shape as a whole,
the first direction is a longitudinal direction of the resin member,
the film piece includes a plurality of film pieces, and
the bonding unit is configured to sequentially perform bonding of the plurality of film pieces being sequentially conveyed by the second conveyor at a plurality of positions in the longitudinal direction of the resin member.

3. The film piece bonding device according to claim 2, wherein the second conveyor includes a plurality of conveying routes.

4. The film piece bonding device according to claim 3, wherein
the second conveyor includes a conveyor configured to clamp the film piece, the conveyor configuring a first conveying route and a conveyor configured to clamp the film piece, the conveyor configuring a second conveying route, and
the film piece bonding device further comprises a receiver base that is disposed in a middle between the first conveyor and the second conveyor, and is configured to support an end portion of the film piece, the end portion being on a side opposite to a side of the film piece clamped by the conveyor configuring the first conveying route or the second conveying route.

5. The film piece bonding device according to claim 3 or 4, further comprising a cutting unit configured to cut out the film piece from a raw film, wherein
the second conveyor is configured to move between a plurality of positions, each of the plurality of positions being at which the film piece cut by the cutting unit is to be supplied to each of the plurality of conveying routes.

6. The film piece bonding device according to claim 3 or 4, further comprising:
a cutting unit configured to cut out the film piece from a raw film; and
a sorter configured to sort the film piece cut by the cutting unit into any one of the plurality of conveying routes.

7. The film piece bonding device according to any one of claims 1 to 6, wherein
the second conveyor includes a pair of belts that are arranged adjacent to each other and configured to clamp the film piece, and
at least one of the pair of belts includes a magnetic material.

8. The film piece bonding device according to any one of claims 1 to 7, wherein the bonding unit includes a heat sealer or an ultrasonic sealer.

9. A film manufacturing device comprising the film piece bonding device according to any one of claims 1 to 8, wherein
the resin member includes a film having an elongated shape and an elongated member bonded to the film and extending in a width direction of the film, the elongated member having a cut, and
the bonding unit is configured to bond the film piece to a region covering the cut of the resin member.

10. A bag-shaped container manufacturing device comprising the film manufacturing device according to claim 9, wherein
the bag-shaped container manufacturing device further comprises a bag manufacturing mechanism configured to shape the film into a bag shape.

11. A film piece bonding method, comprising:
first conveying of conveying a resin member in a first direction;
second conveying of conveying a film piece in a second direction intersecting with the first direction; and
bonding of bonding the film piece to the resin member by pressing the film piece against the resin member, the film piece being held after being conveyed in the second direction, the resin member being opposed to the film piece in a direction orthogonal to the first direction and to the second direction.

12. The film piece bonding method according to claim 11, wherein
the resin member has an elongated shape as a whole,
the first direction is a longitudinal direction of the resin member,
the film piece includes a plurality of film pieces,
the second conveying includes sequentially conveying the plurality of film pieces in the second direction, and
the bonding includes sequentially bonding the plurality of film pieces at a plurality of positions in the longitudinal direction of the resin member.

13. The film piece bonding method according to claim 12, wherein the second conveying includes conveying the plurality of film pieces through any of a plurality of conveying routes.

14. The film piece bonding method according to claim 13, further comprising cutting out the film piece from a raw film, wherein
the second conveying includes supplying the film piece cut from the raw film to any of the plurality of conveying routes by moving a conveying unit configuring the plurality of conveying routes.

15. The film piece bonding method according to claim 13, further comprising:
cutting out the film piece from a raw film; and
sorting the film piece cut from the raw film to any of the plurality of conveying routes.

16. The film piece bonding method according to any one of claims 11 to 15, wherein the bonding includes bonding the film piece to the resin member by heat sealing or ultrasonic sealing.

17. A film manufacturing method comprising the film piece bonding method according to any one of claims 11 to 16, wherein
the resin member includes a film having an elongated shape and an elongated member bonded to the film and extending in a width direction of the film, the elongated member having a cut, and
the bonding includes bonding the film piece to a region covering the cut of the resin member.

18. A bag-shaped container manufacturing method comprising the film manufacturing method according to claim 17, wherein
the bag-shaped container manufacturing method further comprises shaping the film into a bag shape.
